# EUROPÄISCHE PATENTANMELDUNG

(11) **EP 0 922 381 A1**
(43) Veröffentlichungstag der Anmeldung: **16.06.1999**
(21) Anmeldenummer: 98123397.6
(22) Anmeldetag: 09.12.1998
(51) Int. Cl.: A01G 1/02, A01D 11/00

(54) **Landwirtschafliches Erntegerät insbesondere zum Stechen von Spargel**

(30) Priorität: 11.12.1997 DE 29721917 U
(71) Anmelder: Bux, Erich, 76646 Bruchsal (DE)
(72) Erfinder: Bux, Erich, 76646 Bruchsal (DE)
(74) Vertreter: Lasch, Hartmut Dipl.-Ing.

(57) **Zusammenfassung**

Ein landwirtschaftliches Gerät insbesondere zum Stechen von Spargel (10) besitzt eine Haltestange (1) und ein an der Haltestange gelagertes und relativ zu dieser verstellbares Kraftübertragungselement (4), das ein Messer (8) trägt. Mit Hilfe des Messers ist bei Verstellung des Kraftübertragungselementes eine zur Haltestange im wesentlichen senkrechte Schneidbewegung ausführbar. Vorzugsweise ist das Messer während der Schneidbewegung an einem Führungsteil geführt.

## Beschreibung

Die Erfindung betrifft ein landwirtschaftliches Erntegerät insbesondere zum Stechen von Spargel.

Spargelstangen sind in der Wachstumsphase vollständig vom Erdboden bedeckt und müssen zur Ernte bzw. zum Stechen zunächst manuell einzeln freigelegt und dann mit einem speziellen Messer gestochen bzw. abgeschnitten werden. Da diese Arbeit von den die Ernte ausführenden Personen in stark gebückter Haltung ausgeführt wird, ist sie sehr anstrengend und kann auf die Dauer gesundheitsschädlich sein. Außerdem ist das Ernten auf diese Weise sehr zeitaufwendig und somit wenig wirtschaftlich.

Der Erfindung liegt die Aufgabe zugrunde, ein landwirtschaftliches Erntegerät der genannten Art zu schaffen, daß das Ernten von Spargel oder ähnlich wachsendem Gemüse erleichtert und den dafür notwendigen Zeitaufwand verringert.

Diese Aufgabe wird erfindungsgemäß mit einem Erntegerät mit dem im Anspruch 1 aufgeführten Merkmalen gelöst.

Mit dem erfindunsgemäßen Erntegerät wird der Spargel in der Weise gestochen, daß die Haltestange in der Nähe einer Spargelstange zusammen mit dem das Messer tragenden Kraftübertragungselement senkrecht von oben in die Erde hineingedrückt und nach Erreichen einer vorgegebenen Tiefe durch gegenseitige Verstellung von Haltestange und Kraftübertragungselement betätigt wird. Dabei führt das Messer eine Bewegung in einer im wesentlichen senkrecht zur Haltestange, d.h. horizontal verlaufenden Ebene aus, wodurch die Spargelstange abgeschnitten wird. Es hat sich gezeigt, daß die Arbeit mit Hilfe des erfindungsgemäßen Erntegerätes nicht nur wesentlich erleichtert ist, sondern daß sich der für die Ernte notwendige Zeitaufwand wesentlich verringert, so daß insgesamt eine höhere Arbeitsleistung zu erzielen ist. Darüber hinaus lassen sich die Stechverluste minimieren.

Eine sichere Schneidbewegung läßt sich erzielen, wenn das Messer während der Schneidbewegung an einem Führungsteil geführt ist.

Vorzugsweise ist das Messer am unteren Ende der Haltestange angebracht und das Kraftübertragungselement verläuft im wesentlichen parallel zur Haltestange.

In Weiterbildung der Erfindung kann vorgesehen sein, daß die Haltestange in einer ersten Stellung bzw. Ausgangsstellung senkrecht zur Schneide des Messers und parallel zu dessen Schneidebene verläuft. Wenn das Kraftübertragungselement relativ zur Haltestange verstellt wird, führt auch das Messer eine Bewegung relativ zur Haltestange aus, bei der die Schneide des Messers in eine zur Haltestange im wesentlichen senkrechte Ebene umgelenkt wird, woraufhin die Spargelstange abgetrennt wird. Wegen des in der Ausgangsstellung senkrecht stehenden Messers läßt sich das Erntegerät mit nur geringer Kraft in den Erdboden eindrücken.

Die Umlenkung des Messers läßt sich in besonders einfacher Weise erreichen, wenn das Messer zumindest parallel zur Schneide elastisch verformbar bzw. biegbar ist. Eine definierte Umlenkbewegung ist zu erzielen, wenn das Führungsteil Umlenkkanten aufweist, an denen die Schneidebene des Messers bei gegenseitiger Verstellung der Haltestange und des Kraftübertragungselementes geführt ist und die die Schneidebene in die zur Haltestange senkrechte Ebene umlenken. In einer ersten Ausgestaltung ist das Kraftübertragungselement eine Betätigungsstange, die vorzugsweise im wesentlichen parallel zur Haltestange verläuft und relativ zu dieser in Längsrichtung verschiebbar ist. Mit Hilfe des o.g. Führungsteils kann die in Längsrichtung verlaufende Verschiebung des Messers mittels der Umlenkkanten in eine senkrecht dazu verlaufende Schneidbewegung umgesetzt werden.

In einer weiteren Ausgestaltung kann vorgesehen sein, daß das Kraftübertragungselement eine Welle ist, die in der als Rohr ausgebildeten Haltestange drehbar gelagert ist und an deren Ende das Messer senkrecht zur Welle angebracht ist. Alternativ ist es auch möglich, daß das Kraftübertragungselement ein Rohr ist, in dem die Haltestange drehbar gelagert ist, und an dessen Ende das Messer senkrecht zur Rohrachse angebracht ist.

In bevorzugter Ausgestaltung der Erfindung ist vorgesehen, daß das Führungsteil eine Messeraufnahme aufweist, in die das Messer einführbar ist. Wenn das Messer sich in der Messeraufnahme befindet, wird die Schneide des Messers beim Eindrücken des Erntegerätes in den Erdboden nur gering beansprucht, da sie durch die Messeraufnahme geschützt ist.

Wenn die Haltestange und das Kraftübertragungselement relativ zueinander drehbar ausgebildet sind, können geeignete Abdichtungen vorgesehen sein, die sicherstellen, daß keine Erde zwischen die gegeneinander beweglichen Teile gelangt.

Mittels des Kraftübertragungselementes muß die Betätigungskraft des Benutzers über eine Verstellung des Kraftübertragungselementes relativ zur Haltestange in die Schneidbewegung des Messers umgesetzt werden. Dabei kann das Kraftübertragungselement beispielsweise als Drahtlitze ausgebildet sein, so daß es nur Zugkräfte überträgt. Vorzugsweise ist das Kraftübertragungselement jedoch eine Betätigungsstange, mit der sowohl Zug- als auch Druckkräfte übertragen werden können. In Weiterbildung der Erfindung kann vorgesehen sein, daß dem Kraftübertragungselement eine Rückstellfeder zugeordnet ist, die das Messer nach dem Abschneiden des Spargels in die Ausgangsstellung zurückbringt.

Zur Betätigung des Erntegerätes kann am oberen Ende der Haltestange ein Griff befestigt und das Kraftübertragungselement mit einem Hebel verbunden sein, der so angebracht ist, daß der Griff und der Hebel vom Benutzer mit einer Hand umfaßt werden können. Das Erntegerät kann dann mit einer Hand bedient werden, wobei in diesem Fall vorzugsweise eine Rückstellfeder vorgesehen ist.

Bei den Weiterbildungen gemäß den Ansrpüchen 12 und 13 wird, wenn das Erntegerät in die Schnittposition gebracht ist, das Messer soweit, also bis zu 180° geschwenkt, daß der Spargel abgeschnitten wird.

Weitere Einzelheiten und Merkmale der Erfindung sind aus der folgenden Beschreibung von Ausführungsbeispielen unter Bezugnahme auf die Zeichnungen näher erläutert. Es zeigen:
- Figur 1: ein erstes Ausführungsbeispiel des Erntegerätes in einer Seitenansicht,
- Figur 2: das Führungsteil des Erntegerätes gemäß Figur 1 in Aufsicht,
- Figur 3: ein zweites Ausführungsbeispiel des Erntegerätes in einem Längsschnitt und
- Figur 4: das Erntegerät gemäß Figur 3 in einem Querschnitt.

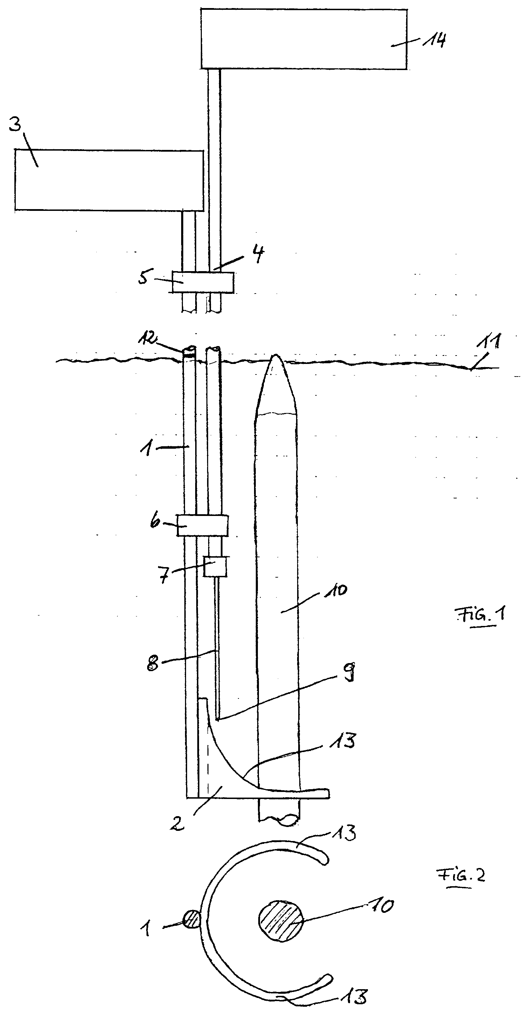

Ein in den Figuren 1 und 2 dargestelltes landwirtschaftliches Erntegerät zum Stechen von Spargel besitzt eine im wesentlichen vertikale Haltestange 1, an deren unterem Ende ein Führungsteil 2 angebracht ist. Das Führungsteil 2 erstreckt sich im wesentlichen senkrecht zur Haltestange 1 und hat in der zur Haltestange 1 senkrechten Ebene die Form eines offenen Ringes. Alternativ kann auch eine Gabelform oder die Form eines geschlossenen Ringes vorgesehen sein. Das Führungsteil 2 weist auf seiner Oberseite Umlenkkanten 13 auf, deren Funktion weiter unten beschrieben ist. Das Führungsteil 2 kann aus einem Rohr passenden Durchmessers gefertigt sein, es ist jedoch auch möglich, es aus einem Drahtring zu bilden, der so gebogen und an der Haltestange 1 befestigt ist, daß er die Umlenkkanten 13 bildet.

An der Haltestange 1 sind in Längsrichtung beabstandete Führungen 5 und 6 angebracht, in denen eine als Kraftübertragungselement dienende Betätigungsstange 4 verschieblich gelagert ist, die im wesentlichen parallel zur Haltestange 1 verläuft und an ihrem oberen Ende mit einem Griff 14 versehen ist. Die Betätigungsstange 4 trägt an ihrem unteren Ende mittels einer Halterung 7 ein Messer 8, das aus einer elastischen Federplatte besteht, deren untere Kante als Schneide 9 ausgebildet ist. Die Breite des Messers 8 entspricht dabei zumindest dem größten Abstand der Umlenkkanten 13.

Zum Ernten einer Spargelstange 10 ergreift ein Benutzer die Haltestange 1 an einem oberen Griffteil 3 und drückt sie mit dem Führungsteil 2 voran zusammen mit der Betätigungsstange 4, die an ihrem unteren Ende das Messer 8 trägt, senkrecht von oben in den Erdboden 11 hinein, wobei das ringförmige Führungsteil 2 die Spargelstange 10 mit Abstand umschließt. Wenn das Erntegerät bis zu einer an der Haltestange 1 angebrachten Markierung 12 in den Erdboden hineingedrückt ist, wird die Betätigungsstange 4 relativ zur Haltestange 1 nach unten verschoben, wobei das Messer auf die Umlenkkanten 13 des Führungsteils 2 trifft, durch diese umgebogen wird und an diesen entlang gleitet. Dabei wird die Schneide 9 des Messers 8 in die Horizontale umgelenkt und die Spargelstange 10 im weiteren Verlauf der Bewegung abgeschnitten. Nach Zurückziehen des Messers 8 durch Anheben der Betätigungsstange 4 können die Spargelstange und das Erntegerät dem Erdboden entnommen werden.

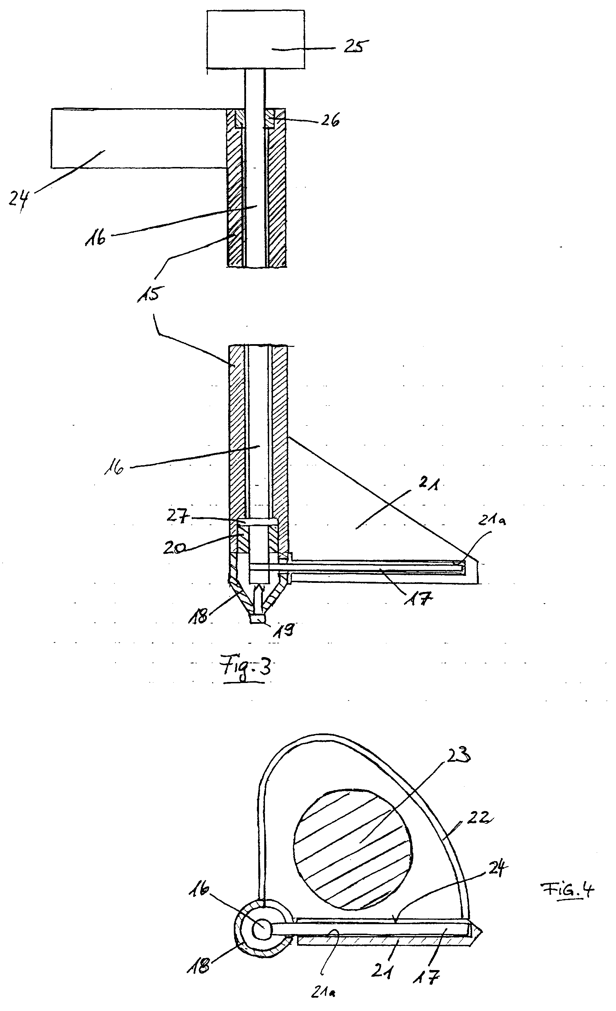

Im Ausführungsbeispiel gemäß den Figuren 3 und 4 ist die Haltestange 15 rohrförmig ausgebildet und trägt an ihrem oberen Ende einen Griff 24. Das untere Ende der rohrförmigen Haltestange 15 ist mit einer sich konisch verjüngenden Kappe 18 abgeschlossen, die an ihrem unterem Ende eine als Auflager dienende Schraube 19 trägt. Innerhalb der Haltestange 15 erstreckt sich eine als Kraftübertragungselement wirkende Welle 16, die relativ zur Haltestange 15 drehbar ist und mittels der Schraube 19 und einem Ring 27 axial fixiert ist. Filzdichtungen 20 und 26 verhindern das Eindringen von Schmutz zwischen die rohrförmige Haltestange 15 und die Welle 16. Am unteren Ende der Welle 16 ist ein die Haltestange 15 bzw. Kappe 18 radial durchdringendes Messer 17 befestigt, das bei Drehen der Welle 16 eine horizontale Schneidbewegung ausführt. Auf dem oberen Ende der Welle 16 sitzt ein Knauf 25, mit dem die Welle 16 und somit das Messer 17 von einem Benutzer geschwenkt werden kann. Eine an der Haltestange 15 außenseitig befestigte Messeraufnahme 21, die sich im wesentlichen vertikal erstreckt und radial von der Haltestange 15 vorsteht, hat etwa Dreiecksform mit einem horizontalen Schlitz 21a, in den das Messer 17 eingeschwenkt werden kann. In dieser Stellung ist es beim Eindrücken des Erntegerätes in den Erdboden gegen mechanische Beschädigungen und frühzeitigen Verschleiß geschützt. Um das Einführen des Erntegerätes in den Erdboden zu erleichtern, kann die Messeraufnahme 21 unterseitig spitz zulaufen.

Gemäß Figur 4 befindet sich das Messer 17, dessen Schneide mit 24 bezeichnet ist, in der dargestellten Stellung in dem Schlitz 21a der Messeraufnahme 21. Einerseits am radial äußeren Ende der Messeraufnahme 21 und andererseits an der Haltestange 15 oder an der Kappe 18 ist ein Drahtbügel 22 befestigt, der zusammen mit der Messeraufnahme 21 einen geschlossenen Ring bildet, der in einer zur Welle 16 senkrechten Ebene liegt und im Falle eines Spargelerntegerätes größer als der Durchmesser einer Spargelstange 23 ist. Zum Ernten einer Spargelstange 23 wird das Erntegerät senkrecht von oben in den Erdboden hineingedrückt, wobei der aus dem Tragbügel 22 und der Messeraufnahme 21 bestehende Ring die Spargelstange 23 mit Abstand umschließt. Wenn das Gerät weit genug, beispielsweise bis zu einer an der Haltestange 15 angebrachten Markierung in den Erdboden hineingedrückt ist, wird mittels des Knaufs 25 der Welle 16 das Messer 17 aus der Messeraufnahme 21 heraus um etwa 90° geschwenkt, so daß die Spargelstange 23 abgeschnitten wird. Dabei wird das Messer auf der Oberseite des Drahtbügels 22 geführt. Nach dem Zurückschwenken des Messers 17, wozu eine Rückholfeder eingesetzt werden kann, können das Erntegerät und die Spargelstange dem Erdboden entnommen werden.

## Patentansprüche

1. Landwirtschaftliches Erntegerät, insbesondere zum Stechen von Spargel, mit einer Haltestange (1; 15) und einem an der Haltestange (1; 15) gelagerten und relativ zu dieser verstellbaren Kraftübertragungselement (4; 16), das ein Messer (8; 17) trägt, mittels dessen bei Verstellung des Kraftübertragungselementes (4; 16) eine zur Haltestange (1; 15) im wesentlichen senkrechte Schneidbewegung ausführbar ist.

2. Erntegerät nach Anspruch 1, dadurch gekennzeichnet, daß das Messer (8; 17) während der Schneidbewegung an einem Führungsteil (2; 22) geführt ist.

3. Erntegerät nach Anspruch 1 oder 2, dadurch gekennzeichnet, daß das Messer (8; 17) am unteren Ende der Haltestange (1; 15) angebracht ist.

4. Erntegerät nach einem der Ansprüche 1 bis 3, dadurch gekennzeichnet, daß das Kraftübertragungselement (4; 16) im wesentlichen parallel zur Haltestange (1; 15) verläuft.

5. Erntegerät nach einem der Ansprüche 1 bis 4, dadurch gekennzeichnet, daß die Haltestange (1) in einer ersten Stellung senkrecht zur Schneide (9) des Messers (8) und parallel zu dessen Schneidebene verläuft und daß die Schneide (9) des Messers (8) durch gegenseitige Verstellung von Haltestange (1) und Kraftübertragungselement (4) in eine zur Haltestange (1) senkrechte Ebene umlenkbar ist.

6. Erntegerät nach Anspruch 5, dadurch gekennzeichnet, daß das Messer (8) parallel zur Schneide (9) elastisch biegbar ist und daß das Führungsteil (2) Umlenkkanten (13) aufweist, die bei gegenseitiger Verstellung der Haltestange (1) und des Kraftübertragungselementes (4) die Schneidebene des Messers (8) in die zur Haltestange (1) senkrechte Ebene umlenken.

7. Erntegerät nach einem der Ansprüche 1 bis 6, dadurch gekennzeichnet, daß das Kraftübertragungselement eine Betätigungsstange (4) ist.

8. Erntegerät nach Anspruch 7, dadurch gekennzeichnet, daß die Betätigungsstange (4) im wesentlichen parallel zur Haltestange (1) verschiebbar ist.

9. Erntegerät nach einem der Ansprüche 1 bis 6, dadurch gekennzeichnet, daß das Kraftübertragungselement eine Welle (16) ist, die in der rohrförmig ausgebildeten Haltestange (15) drehbar gelagert ist und an deren Ende das Messer (17) senkrecht zur Welle (16) angebracht ist.

10. Erntegerät nach einem der Ansprüche 1 bis 6, dadurch gekennzeichnet, daß das Kraftübertragungselement ein Rohr ist, in dem die Haltestange drehbar gelagert ist und an dessen Ende das Messer senkrecht zur Rohrachse angebracht ist.

11. Erntegerät nach Anspruch 9 oder 10, dadurch gekennzeichnet, daß das Führungsteil eine Messeraufnahme (21) aufweist, in die das Messer (17) einführbar ist.

12. Erntegerät nach einem der Ansprüche 1 bis 11, dadurch gekennzeichnet, daß das Messer an zwei parallelen im Führungsteil (2) gelagerten Schwenkhebeln befestigt ist.

13. Erntegerät nach einem der Ansprüche 1 bis 12, dadurch gekennzeichnet, daß das Messer halbrund gebogen ist und an den Enden im Führungsteil drehbar gelagert ist.

14. Erntegerät nach einem der Ansprüche 1 bis 13, dadurch gekennzeichnet, daß das Führungsteil (12) in einer zur Haltestange (1) senkrechten Ebene einen Ring, einen Halbring oder eine Gabel mit einer Weite von mindestens 2 cm aufweist.
